# DEMANDE DE BREVET EUROPEEN

(11) **EP 1 231 020 A1**
(43) Date de publication de la demande: **14.08.2002**
(21) Numéro de dépôt: 02356010.5
(22) Date de dépôt: 24.01.2002
(51) Int. Cl.: B23Q 17/22, B23B 41/00, B23Q 3/18

(54) **Dispositif de référencement de la position angulaire d'un vilebréquin, ou équivalent, à au moins un poste d'usinage ou de traitement**

(30) Priorité: 29.01.2001 FR 0101533
(71) Demandeur: Atamec C. Fourneyron, 42000 Saint Etienne (FR)
(72) Inventeur: Alfieri, Antoine, 42000 Saint Etienne (FR); Murgue, Daniel, 42330 Aveizieux (FR)
(74) Mandataire: Perrier, Jean-Pierre

(57) **Abrégé**

Ce dispositif comprend : a) un doigt de palpage (28), mobile dans un corps de guidage (22) entre une position de palpage, et une position de référencement, dans laquelle son extrémité inférieure est en appui sur un corps d'appui (32), disposé au-dessous de lui, b) un coulisseau (23), monté coulissant sur une glissière (24) portant le corps de guidage (22) et le corps d'appui (32), ce coulisseau étant relié à des moyens (50) aptes à le déplacer dans les deux sens entre une position de palpage, dans laquelle le doigt (28) est dans la trajectoire circulaire d'une partie excentrée (7f) du vilebrequin, et une position escamotée, c) et des moyens (38) détectant l'appui du doigt du palpage (28) sur le corps d'appui (32), ces moyens réagissant sur la commande numérique (20) du poste de travail, dans le sens d'une poursuite du cycle de travail, tandis que, d'une part, la commande numérique (20) assure l'entraînement en rotation du mandrin sur une fraction de tour, de valeur angulaire supérieure à celle nécessaire au vilebrequin (7) pour venir en appui sur le doigt de palpage (28), et que, d'autre part, les moyens d'entraînement en rotation comprennent des moyens (16) débrayant l'entraînement du vilebrequin dès qu'il est en butée mécanique sur le doigt de palpage (28).

## Description

L'invention est relative à un dispositif de référencement de la position angulaire d'un vilebrequin, ou équivalent, à au moins un poste d'usinage ou de traitement.

Dans une chaîne de fabrication en grande série, les usinages, traitements et opérations diverses sur les pièces mécaniques sont réalisés par des installations multipostes alimentées poste par poste par des moyens de transfert des pièces, tels que convoyeurs pas à pas, bras robotisés, portiques.

Lorsque les pièces ont des masses déséquilibrées par rapport à un axe longitudinal de référence, tout déplacement d'un poste à un autre conduit à une modification de la position angulaire de la pièce par rapport à la position de référence qu'elle doit occuper au nouveau poste.

Il en est ainsi dans une installation d'usinage réalisant, dans les portées cylindriques et manetons d'un vilebrequin, des perçages chanfreinés faisant partie du circuit de graissage de ce vilebrequin.

L'invention a pour objet de fournir un dispositif permettant, à au moins un poste de travail ou à chacun des postes d'une installation multipostes, de référencer la position angulaire d'un vilebrequin ou équivalent par rapport aux axes de référence du poste, c'est-à-dire d'amener le vilebrequin dans une position angulaire définie et régulière avant lancement de toute opération à ce poste.

Elle concerne plus spécialement les installations dans lesquelles chaque poste de travail comprend:
- des moyens de réception d'au moins un vilebrequin, ou équivalent, amené par des moyens de transfert,
- un mandrin rotatif avec mors hydrauliques coopérant avec une portée cylindrique continue du vilebrequin, ledit mandrin étant muni d'une pointe de centrage et entraîné par un moteur électrique asservi à une commande numérique,
- et, en vis à vis du mandrin, une poupée avec pointe de centrage coaxiale à celle du mandrin et déplaçable longitudinalement pour assurer le positionnement longitudinal du vilebrequin et son élévation par rapport au moyen de réception du poste.

Le dispositif selon l'invention comprend, au-dessous de l'axe longitudinal passant par les deux pointes d'un poste de travail :
- un doigt de palpage, mobile dans un corps de guidage entre une position de palpage, dans laquelle ce doigt, sollicité par des moyens à ressorts, est en saillie vers le haut, et une position de référencement, dans laquelle son extrémité inférieure est en appui sur un corps d'appui, disposé au-dessous de lui,
- au moins une glissière horizontale disposée transversalement à l'axe longitudinal du mandrin, et hors de la trajectoire circulaire du vilebrequin,
- un coulisseau, monté coulissant sur la glissière et portant le corps de guidage et le corps d'appui du doigt de palpage, ce coulisseau étant relié à des moyens aptes à le déplacer dans les deux sens entre une position de palpage, dans laquelle le doigt est dans la trajectoire circulaire d'une partie excentrée du vilebrequin, constituant portée de référence, et une position escamotée, dans laquelle le doigt est hors de cette trajectoire,
- et des moyens détectant l'appui de l'extrémité inférieure du doigt du palpage sur le corps d'appui, donc la mise en position de référence du vilebrequin, ces moyens réagissant sur la commande numérique du poste de travail dans le sens d'une poursuite du cycle de travail,
tandis que, d'une part, la commande numérique comprend un programme de référencement assurant l'entraînement en rotation du mandrin sur une fraction de tour, de valeur angulaire supérieure à celle nécessaire au vilebrequin pour venir en appui sur le doigt de palpage et que, d'autre part, les moyens d'entraînement en rotation comprennent des moyens débrayant l'entraînement du vilebrequin, dès qu'il est en appui mécanique sur le doigt de butée.

Avec ce dispositif, dès qu'un vilebrequin est amené par des moyens de transfert dans les moyens de réception d'un poste, par exemple dans des V, la pointe mobile en vis à vis du mandrin est déplacée en direction du mandrin, de manière à assurer, par engagement de sa pointe conique et de celle du mandrin dans les cônes ménagés aux extrémités du vilebrequin, la mise en coïncidence de l'axe longitudinal de référence du vilebrequin avec l'axe de rotation du mandrin. Cela a pour effet de soulever le mandrin par rapport à ses V de réception. A ce stade, le coulisseau portant le doigt de palpage est déplacé sur sa glissière de sa position escamotée à sa position de palpage, dans laquelle le doigt de palpage est dans la trajectoire circulaire d'une partie du vilebrequin constituant portée de référence. Simultanément, la commande numérique du poste de travail commande, d'une part, le serrage des mors sur une portée cylindrique continue du vilebrequin et, d'autre part, l'entraînement en rotation de ce vilebrequin sur une valeur angulaire supérieure à la course nécessaire pour assurer le référencement. Durant cette rotation, la portée de référence du vilebrequin vient en contact avec le doigt de palpage. Dans un premier temps, ce doigt s'enfonce à l'encontre de ses moyens de rappel puis, dans un deuxième temps, et par sa face en bout opposée à celle portant le doigt de palpage, vient en appui sur le corps d'appui. A partir de ce moment, le doigt ne peut plus glisser et constitue une butée mécanique qui s'oppose à toute rotation du vilebrequin. Toutefois, cela est sans conséquence sur le vilebrequin et sur le poste de travail grâce aux moyens débrayant l'entraînement du vilebrequin. Le mandrin peut ainsi terminer la course angulaire qui lui est assignée par la commande numérique et qui est, volontairement supérieure à celle normalement nécessaire et cela pour absorber les éventuelles variations de positionnement initial du vilebrequin sur ses berceaux d'accueil.

Le contact de la face en bout du doigt sur le corps d'appui est détecté par des moyens qui réagissent sur la commande numérique, dans le sens de l'arrêt de l'entraînement en rotation du mandrin. Dès cet arrêt, la phase de référencement est terminée.

A partir de là, le cycle de travail pour le poste considéré peut être lancé, par exemple en faisant pivoter le vilebrequin en sens inverse d'une valeur angulaire définie et précise pour amener les manetons devant être usinés dans la position qui leur est assignée par rapport aux axes de référence du poste de travail. Cette rotation en sens inverse a pour effet de libérer le doigt de palpage de tout contact avec la portée de référence et de permettre de déplacer le coulisseau portant le doigt jusqu'à la position d'escamotage de ce doigt.

Ce dispositif est simple, car mécanique, est très précis et coopère, sans difficulté, avec la commande numérique du poste.

Dans une forme d'exécution de ce dispositif, les moyens débrayant l'entraînement en rotation du vilebrequin par le mandrin sont constitués par les moyens hydrauliques de serrage des mors du mandrin sur la portée cylindrique continue du vilebrequin, ces moyens étant réglés, temporairement pendant la phase de référencement par la commande numérique, pour permettre le glissement des mors sur ladite portée, dès que le vilebrequin est en appui sur le doigt de butée.

Cette disposition, qui évite d'avoir recours à un embrayage, est simple à mettre en oeuvre et sans conséquence pour la portée du vilebrequin.

Avantageusement, les moyens de détection de la position de référencement comprennent, d'une part, un circuit pneumatique débouchant par un alésage dans la zone d'appui du doigt sur le corps d'appui, et d'autre part, un pressostat réagissant sur la commande numérique dès la fermeture de l'alésage par le doigt en appui sur le corps d'appui.

Ces moyens de détection sont particulièrement fiables et ont une réaction rapide. En outre, ils sont insensibles à tout encrassement par l'huile et les déchets métalliques, et sont donc fiables.

D'autres caractéristiques et avantages ressortiront de la description qui suit en référence au dessin schématique annexé représentant, à titre d'exemple, une forme d'exécution du dispositif dans le cas de son application à plusieurs postes d'une installation multipostes pour le perçage des alésages du circuit de graissage du vilebrequin.
Figure 1 est une vue de face, avec coupe transversale de vilebrequins disposés à trois des postes A, B et C d'une installation multipostes, le poste A étant représenté après positionnement du vilebrequin dans le mandrin, le poste B après mise en place du doigt de palpage dans la trajectoire d'une portée d'un vilebrequin, le poste C à la fin de l'opération de référencement du vilebrequin,
Figure 2 est une vue en coupe suivant II-II de figure 1,
Figure 3 est une vue en plan par-dessus du poste de travail B de figure 1.

Dans ce dessin, la référence numérique 2 désigne de manière générale un bâti commun aux différents postes et portant les châssis 3a, 3b, 3c de chaque poste, mais aussi des moyens de transfert et, par exemple, une installation à pas de pèlerin 4. Cette installation est équipée de V de positionnement 5 qui, en décrivant la trajectoire représentée par le trait mixte 6, amène chaque vilebrequin 7 sur des V de réception 8 portés par un poste d'accueil, non représenté, et par chacun des postes A, B, C et autres de l'installation.

Chacun des postes A, B, et C comprend, en partie supérieure, dans le rectangle référencé 9a, 9b, 9c, les moyens d'usinage propres à chaque poste, et par exemple :
- pour le poste A, les moyens d'amenage et de positionnement, respectivement, d'un canon de guidage et d'un outil de perçage pour chacun des alésages verticaux devant être réalisés dans le vilebrequin,
- pour le poste B les moyens d'amenage et de positionnement de canon de positionnement et d'outils de perçage pour la réalisation d'alésages inclinés,
- et pour le poste C des moyens d'amenage et de positionnement d'outil de chanfreinage des alésages réalisés au poste B. Ces différents moyens, qui sont indépendants de l'invention, ne justifient pas d'être décrits et représentés, d'autant plus qu'ils peuvent être remplacés par tout autre moyen d'usinage ou de traitement du vilebrequin.

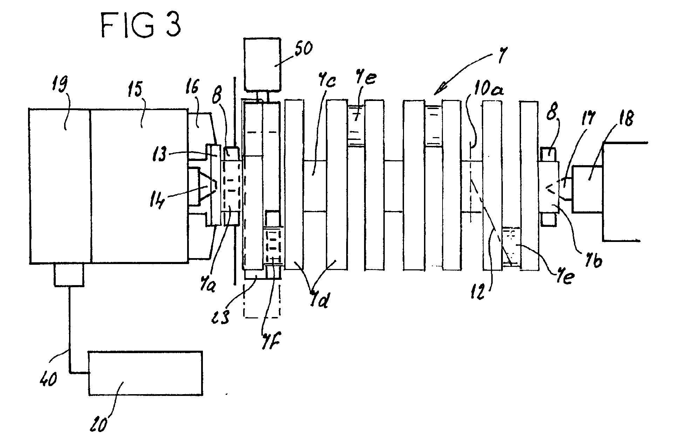

Comme montré à la figure 3, chaque vilebrequin 7 est composé de portées cylindriques, respectivement extrêmes 7a, 7b et intermédiaires 7c, qui sont coaxiales et sont donc traversées longitudinalement par l'axe de rotation du vilebrequin. Les portées intermédiaires 7c sont solidaires de joues 7d portant des manetons 7e constitués par des portées cylindriques excentrées par rapport à l'axe longitudinal du vilebrequin. Ces manetons servent à la fixation et à l'articulation du pied de bielle des pistons d'un moteur thermique.

A titre d'exemple, l'installation décrite est destinée à réaliser, dans chaque vilebrequin, d'une part, des perçages radiaux 10a sur certaines portées cylindriques 7c, formant palier, d'autre part, des perçages inclinés débouchant dans les perçages 10a, comme montré par les traits mixtes 12 à la figure 3, et enfin la réalisation de chanfreins sur les perçages 10a qui sont repercés par un alésage 12. Les alésages 10a sont réalisés au poste A, ceux 12 au poste B et les chanfreins au poste C.

La portée extrême 7a de chaque vilebrequin est solidaire d'une collerette terminale 13 formant une portée circulaire continue pouvant être utilisée pour assurer l'entraînement en rotation du vilebrequin. Enfin, et de façon connue, de chacune des faces en bout du vilebrequin débouche une portée tronconique destinée à coopérer, d'un côté avec la pointe 14 d'un mandrin 15 à mors hydraulique 16 et, de l'autre côté, avec la pointe 17 d'une poupée 18, déplaçable axialement et coaxiale à la pointe 14 qui lui fait vis à vis.

Chaque mandrin 15 est monté libre en rotation dans le châssis 3a, 3b, 3c du poste correspondant et est relié à des moyens d'entraînement constitués par un moteur électrique 19 asservi à une commande numérique 20 régissant, non seulement les mouvements en vitesse et angulation du mandrin, mais aussi les différents autres dispositifs et fonctions du poste de travail.

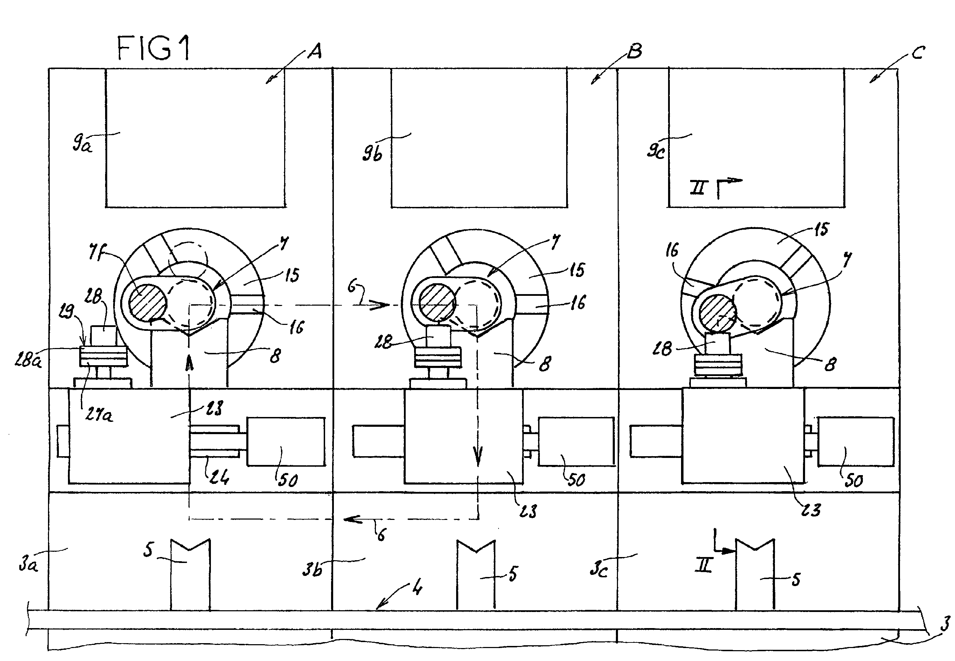

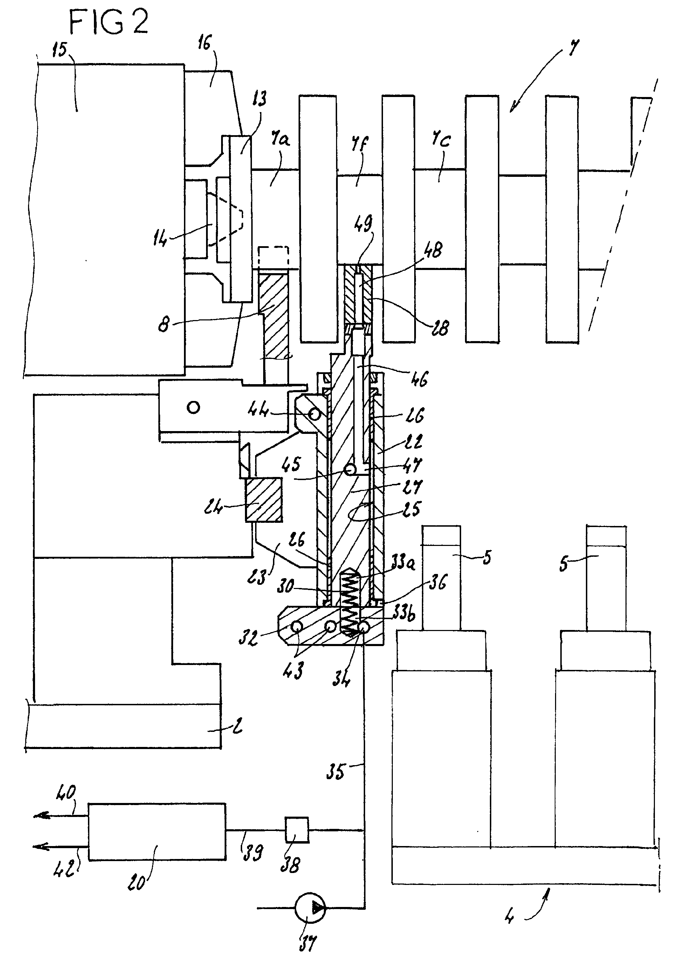

Le dispositif de référencement de la position angulaire du vilebrequin 7 va maintenant être décrit en référence à la figure 2. Ce dispositif est composé d'un corps de guidage 22, solidaire d'un coulisseau 23 monté coulissant sur une glissière transversale 24. Dans la forme d'exécution représentée, cette glissière est horizontale et est disposée au-dessous de l'axe de rotation du mandrin 15, donc de l'axe de pivotement du vilebrequin 7. Le corps 22 est traversé par un alésage 25 qui est ici vertical et qui contient, près de chacune de ses extrémités, des douilles de guidage et d'étanchéité 26 dans lesquelles peut coulisser librement le corps cylindrique 27 d'un doigt de palpage 28. Le doigt de palpage est monté de manière démontable sur le corps 27. Dans la forme d'exécution représentée à la figure 1, il est solidaire d'une bride 28a permettant sa fixation par des vis 29 sur une bride 27a, solidaire du corps 27.

Un ressort 30, prenant appui sur le corps 27 et sur un corps d'appui 32 disposé sur ce corps 27, tend en permanence à pousser le corps 27 à l'opposé du corps d'appui 32. Ce ressort est disposé dans deux alésages borgnes coaxiaux 33a, 33b ménagés le premier dans le corps 27 et le second dans le corps d'appui 32. Ces deux alésages débouchent, respectivement, de la face inférieure du corps 27 et de la face supérieure du corps 32, faces qui sont parfaitement parallèles de manière à former un contact étanche.

L'alésage borgne 33b est relié, par un réseau d'alésages et perforations diverses 34, à un circuit pneumatique 35 l'alimentant en air comprimé. Lorsque le doigt 27, 28 est en position de palpage, c'est-à-dire n'est pas en contact avec une portée de référence du vilebrequin, la face inférieure du corps 27 n'est pas en contact avec le corps d'appui 32 et l'air provenant du circuit pneumatique 35 s'échappe librement par une fente 36, ménagée entre le corps de guidage 22 et le corps d'appui 32.

Le circuit pneumatique 35 est alimenté soit par un réseau d'air comprimé, soit par une pompe 37 et, dans tous les cas, il comporte un pressostat 38 détectant la pression dans le circuit et relié, par une liaison électrique 39, à la commande numérique 20.

La commande numérique 20 est également reliée, par un circuit électrique 40, au boîtier de commande du moteur électrique 19 et, par un circuit électrique 42, à une électrovanne, non représentée, de commande du serrage des mors 16. Enfin, le corps d'appui 32 est traversé par des canaux 43, le corps de guidage 22 par un canal 44 et le corps 27 par des canaux 45, 46 et 47 alimentés en fluide de graissage sous pression pour faciliter les mouvements relatifs de ces organes. Des canaux 48 et 49 ménagés dans le doigt de palpage 28 et communiquant avec le canal 46 du corps 27 alimenté en fluide de graissage, améliorent le contact de ce doigt avec la portée de référence 7f du vilebrequin et chassent les particules métalliques ou copeaux pouvant adhérer sur la face d'appui du doigt de palpage 28.

Chaque poste A, B et C est ainsi équipé d'un doigt de palpage 28 qui, grâce aux moyens déplaçant le coulisseau 23 sur la glissière 24, et par exemple grâce à un vérin pneumatique 50, peut occuper soit une position d'escamotage montrée au poste A, dans laquelle il est hors de la trajectoire des diverses portées du vilebrequin 7, soit une position de palpage, comme montré pour les postes B et C, dans laquelle il est dans la trajectoire de la portée de référence du vilebrequin et, par exemple, du maneton 7f.

Avec ce dispositif, lorsqu'un vilebrequin 7 est déposé par le moyen de transfert à pas de pèlerin sur les V de réception 8 d'un poste de travail, et par exemple, de celui A à la figure 1, son maneton de référence 7f n'occupe pas une position angulaire parfaitement définie par rapport au plan de référence du poste de travail, respectivement vertical et horizontal. Ce positionnement n'est d'ailleurs pas amélioré lors du serrage du vilebrequin 7 entre la pointe 14 du mandrin 15 et la pointe 17 de la poupée mobile 18, puisque ce serrage, en coopération avec les cônes ménagés aux extrémités du vilebrequin, a tendance à soulever légèrement le vilebrequin pour l'éloigner de ces V de réception 8. Cette légère élévation favorise, dans certains cas, le basculement des manetons et accentue le mauvais positionnement du vilebrequin. C'est donc à ce stade que le dispositif de référencement est activé.

L'ensemble du coulisseau 23 qui, jusqu'alors était en position escamotée, est déplacé par le vérin 50 pour venir de la position escamotée, représentée au poste A à la figure 1, à la position de palpage, représentée au poste B à la même figure. Simultanément, la commande numérique 20 commande la fermeture des mors 16 du mandrin 15 sur la portée cylindrique 13 du vilebrequin mais avec un effort de serrage tel, qu'en cas de résistance du mandrin, les mors 16 puissent glisser sur cette portée 13. Le moteur asservi 19 assurant l'entraînement en rotation du mandrin 15 est alors alimenté de manière à effecteur une rotation à faible vitesse sur une fraction de tour, dont la valeur angulaire est volontairement supérieure à celle nécessaire pour assurer la séquence de référencement, afin de pouvoir obtenir un référencement pour tous les mauvais positionnements du maneton de référence pouvant être rencontrés. Durant cette rotation, le maneton de référence 7f vient en contact avec le doigt de palpage 28 puis l'enfonce dans son corps de guidage 22 en comprimant le ressort 30. Quand la face inférieure du corps 27 vient en contact avec le corps d'appui 32, le corps 27 et le doigt 28 forment une butée mécanique qui, comme montré au poste C de la figure 1, s'oppose à la rotation du vilebrequin 7 et détermine la position de référence du vilebrequin.

En raison du contact de la face inférieure du corps de palpage 27 avec le corps d'appui 32, l'air du circuit pneumatique 35 ne peut plus s'échapper par la fente 36 et ce circuit 35 est soumis instantanément à une surpression qui est détectée par le pressostat 38. Ce dernier envoie une information électrique par le circuit 39 à la commande numérique 20 qui commande l'arrêt du moteur électrique 19 assurant l'entraînement en rotation du mandrin 15. Bien que cette séquence soit très rapide, grâce au faible serrage de ces mors sur la portée 13, les mors 16 du mandrin peuvent glisser sur cette portée jusqu'à l'arrêt du moteur, sans aucun risque d'endommagement de celle-ci. La position de l'élément mobile du moteur est mémorisée par la commande numérique qui commande le serrage définitif des mors 16 avec une pression plus importante pour éviter tout glissement, puis le cycle de travail débute. Sa première phase consiste à faire pivoter, en sens inverse, le vilebrequin, par exemple, pour amener le maneton 7f dans la position représentée en traits mixtes au poste A, en vue de la réalisation des perçages radiaux 10a. Cette rotation inverse présente l'avantage de dégager le doigt de palpage 28 qui, sous l'action de son ressort de rappel 30, revient en position verticale de palpage, tandis que, sous l'action du vérin 50 déplaçant le coulisseau 23, il est ramené en position latérale escamotée.

A la fin de chaque cycle de travail à un poste, le vilebrequin est reposé sur des V 8, puis est déplacé par les moyens de transfert 4 à pas de pèlerin sur les V du poste suivant, où il est soumis à un nouveau cycle de référencement de sa position angulaire, avant tout cycle de travail.

Ce dispositif qui fait appel à des moyens mécaniques pour déterminer la position de référence du vilebrequin et à des moyens hydrauliques et pneumatiques pour commander les déplacements transversaux et détecter la position de référencement, est particulièrement simple et fiable dans le temps et est insensible à l'ambiance du poste de travail.

Le dispositif a été décrit ci-dessus dans le cas de son application à l'usinage ou au traitement d'un seul vilebrequin par poste de travail, mais il est évident que, pour un poste de travail usinant simultanément plusieurs vilebrequins, chacun des vilebrequins est associé à un dispositif selon l'invention assurant le référencement de sa position angulaire avant toute opération d'usinage ou de traitement. De même, ce dispositif est applicable à une installation ne comportant qu'un poste de travail

En outre, bien que décrit dans le cas de son application au référencement d'un vilebrequin, le dispositif peut être appliqué au référencement de la position angulaire de tous corps comportant des parties excentrées par rapport à un axe longitudinal de référence, tel qu'arbre à cames.

## Revendications

1. Dispositif de référencement de la position angulaire d'un vilebrequin, ou équivalent, à au moins un poste d'usinage ou de traitement comprenant :
- des moyens de réception (8) d'au moins un vilebrequin (7) amené par des moyens de transfert (4, 5),
- un mandrin rotatif (15) avec mors hyrdraulique (16) coopérant avec une portée cylindrique continue (13), ledit mandrin étant muni d'une pointe de centrage (14) et entraîné par un moteur électrique (19) asservi à une commande numérique (20),
- et, en vis à vis du mandrin (15), une poupée (18) avec pointe de centrage (17) coaxiale à celle du mandrin et déplaçable longitudinalement pour assurer le positionnement longitudinal du vilebrequin (7) et son élévation par rapport aux moyens de réception (8) du poste, **caractérisé en ce qu'**il comprend, au-dessous de l'axe longitudinal passant par les deux pointes (14, 17):
- un doigt de palpage (28), mobile dans un corps de guidage (22) entre une position de palpage, dans laquelle ce doigt (28), sollicité par des moyens à ressorts (30), est en saillie vers le haut, et une position de référencement, dans laquelle son extrémité inférieure est en appui sur un corps d'appui (32), disposé au-dessous de lui,
- au moins une glissière horizontale (24) disposée transversalement à l'axe longitudinal du mandrin (15), et hors de la trajectoire circulaire du vilebrequin (7),
- un coulisseau (23), monté coulissant sur la glissière (24) et portant le corps de guidage (22) et le corps d'appui (32) du doigt de palpage, ce coulisseau étant relié à des moyens (50) aptes à le déplacer dans les deux sens entre une position de palpage, dans laquelle le doigt (28) est dans la trajectoire circulaire d'une partie excentrée du vilebrequin, constituant portée de référence (7f), et une position escamotée, dans laquelle le doigt (28) est hors de cette trajectoire,
- et des moyens (38) détectant l'appui de l'extrémité inférieure du doigt du palpage (28) sur le corps d'appui (32), donc la mise en position de référence du vilebrequin, ces moyens réagissant sur la commande numérique (20) du poste de travail, dans le sens d'une poursuite du cycle de travail,
tandis que, d'une part, la commande numérique (20) comprend un programme de référencement assurant l'entraînement en rotation du mandrin sur une fraction de tour, de valeur angulaire supérieure à celle nécessaire au vilebrequin (7) pour venir en appui sur le doigt de palpage (28) et que, d'autre part, les moyens d'entraînement en rotation comprennent des moyens (16) débrayant l'entraînement du vilebrequin dès qu'il est en butée mécanique sur le doigt de palpage (28)

2. Dispositif selon la revendication 1, **caractérisé en ce que** les moyens débrayant l'entraînement en rotation du vilebrequin (7) par le mandrin (15) sont constitués par les moyens hydrauliques de serrage des mors (16) du mandrin sur la portée cylindrique continue (13) du vilebrequin, ces moyens étant réglés, temporairement pendant la phase de référencement et par la commande numérique (20), pour permettre le glissement des mors (16) sur ladite portée (13) dès que le vilebrequin est en butée sur le doigt de palpage (28).

3. Dispositif selon la revendication 1, **caractérisé en ce que** les moyens de rappel en position de palpage du doigt de palpage (28) sont constitués par un ressort hélicoïdal (30) prenant appui sur le doigt et sur le corps d'appui (32).

4. Dispositif selon la revendication 1, **caractérisé en ce que** les moyens de détection de la position de référencement du vilebrequin (7) comprennent, d'une part, un circuit pneumatique (35) débouchant par un alésage (33b) dans la zone d'appui du doigt de palpage (28) sur le corps d'appui (32) et, d'autre part, un pressostat (38) réagissant sur la commande numérique (20) dès la fermeture de l'alésage (33b) par le doigt de palpage (28) en butée sur le corps d'appui (32).
